# EUROPÄISCHE PATENTSCHRIFT

(11) **EP 2 759 814 B1**
(45) Veröffentlichungstag und Bekanntmachung des Hinweises auf die Patenterteilung: **16.09.2015**
(21) Anmeldenummer: 14151163.4
(22) Anmeldetag: 14.01.2014
(51) Int. Cl.: G01F 23/284, G01V 3/12

(54) **Mikrowellenschranke und Verfahren zur Erkennung eines Objekts in einem Mikrowellenpfad**
Microwave barrier and method for detecting an object in a microwave path
Armoire à micro-ondes et procédé de détection d'un objet dans un chemin de micro-ondes

(30) Priorität: 28.01.2013 DE 102013100817
(43) Veröffentlichungstag der Anmeldung: 30.07.2014
(73) Patentinhaber: SICK AG, 79183 Waldkirch (DE)
(72) Erfinder: Weber, Thomas, 77960 Seelbach (DE)
(74) Vertreter: Hehl, Ulrich

(56) Entgegenhaltungen:
- EP-A1- 0 898 153
- EP-A1- 0 977 020
- DE-A1- 3 302 731
- DE-A1- 3 302 731
- GB-A- 2 152 333
- US-A1- 2005 221 765
- US-A1- 2007 296 626
- US-B1- 6 490 066

## Beschreibung

Die Erfindung betrifft eine Mikrowellenschranke und ein Verfahren zur Erkennung eines Objekts in einem Mikrowellenpfad nach dem Oberbegriff von Anspruch 1 beziehungsweise 12.

Zur berührungslosen Erkennung von Objekten werden häufig Lichtschranken eingesetzt. Das optische Spektrum ist aber nicht für alle Anwendungen geeignet, etwa in Umgebungen mit starken Verunreinigungen. Deshalb gibt es Einsatzgebiete, in denen eine Mikrowellenschranke die günstigere Wahl darstellt. Mikrowellen durchdringen nicht nur undurchsichtige Kleinpartikel, sondern mindestens dünne Schichten nichtmetallischer Objekte und ermöglichen damit sogar eine Überwachung in geschlossene Behälter hinein. Eine Mikrowellenschranke arbeitet im Prinzip wie eine Lichtschranke: Es wird auf einer Seite des zu überwachenden Bereichs ein Mikrowellensignal ausgesandt und gegenüber wieder empfangen. Tritt ein Objekt in diesen Mikrowellenpfad ein, so verändert sich das empfangene Mikrowellensignal, woran die Anwesenheit des Objekts erkannt werden kann.

Eine spezielle Anwendung für Mikrowellenschranken ist die Grenzstanderfassung von Medien in Behältern, wie Flüssigkeiten oder Schüttgütern. Hier ist das zu erkennende Objekt das Medium, welches ab einem gewissen Füllstand oder Grenzstand den Mikrowellenpfad erreicht und dadurch das Mikrowellensignal dämpft. So werden insbesondere die kritischen Füllstände Überlauf oder Leerlauf überwacht, damit eine Regelung des Füllstands rechtzeitig eingreifen kann. Für eine Grenzstandsermittlung sind zahlreiche andere Alternativen bekannt, etwa Schwinggabelsensoren, Radarsensoren, auf Ultraschall basierende oder kapazitive Systeme. Mikrowellenschranken zeigen hiergegen Vorteile in Bezug auf die Robustheit gegenüber Störeinflüssen wie Temperatur, Druck, Staub oder Lärm.

Herkömmliche Mikrowellenschranken, wie beispielsweise aus der DE 33 02 731 A1 bekannt, sind in eine Sende- und eine Empfangseinheit aufgeteilt. Dies bedeutet zunächst, dass die Mikrowellenschranke aus zwei unterschiedlichen Einheiten besteht, die nicht gegeneinander austauschbar sind. Zudem muss in vielerlei Hinsicht die Zuordnung zwischen Sende- und Empfangseinheit sichergestellt werden, vor allem wenn mehrere Mikrowellenschranken nebeneinander betrieben werden. So wird ein Antennendesign mit kleiner Abstrahlkeule gewählt, um eine Richtwirkung auf die zugehörige gegenüberliegende Einheit der Mikrowellenschranke zu erzielen. Solche Antennen können große, bei der Montage störende Abmessungen annehmen, und zugleich ist eine recht genaue Montage und Ausrichtung der Einheiten erforderlich.

Außerdem müssen Parameter wie Trägerfrequenz, Modulationsfrequenz oder Polarisationsrichtung in Sende- wie Empfangseinheit gleichermaßen eingestellt werden, so dass die zugehörigen Einheiten einander erkennen und von fremden Einheiten anderer Mikrowellenschranken möglichst wenig beeinflusst werden. Derartige Einstellungen können nur mit genauem Verständnis der Arbeitsweise der Mikrowellen vorgenommen werden, und selbst für entsprechendes Fachpersonal erhöht sich der notwendige Zeitaufwand für die Inbetriebnahme. Die genannten Restriktionen zum Sicherstellen einer eindeutigen Zuordnung wirken sich auch auf die Anordnungsmöglichkeiten der Einheiten aus, die beispielsweise zur Vermeidung von Fehlzuordnungen genügend Abstand zueinander haben sollten. Da zwischen der herkömmlichen Sende- und Empfangseinheit keine übergeordnete informationstechnische Kopplung besteht, sind Störeinflüsse wie abnehmende Senderleistung oder Mehrwegeausbreitung schwer zu kontrollieren.

Die US 2007/0296626 A1 beschreibt eine Mikrowellen-Transceivereinheit zur Erkennung einer Füllhöhe von Abfällen in einer Müllverbrennungsanlage. Dabei sind in einer Ausführungsform zwei Mikrowellenschranken für die Erkennung zweier Füllhöhen vorgesehen, die zur Vermeidung gegenseitiger Störungen zueinander gekreuzt angeordnet sind.

Die EP 0 977 020 A1 offenbart eine Radarschranke, bei der das empfangene Radarsignal zunächst auf eine Lokalfrequenz heruntergemischt wird, um dann Störfrequenzen mit einem geeigneten Bandpassfilter für die Lokalfrequenz ausblenden zu können. In einer Weiterbildung sind auf beiden Seiten der Radarschranke bifunktionale Antennen vorgesehen, um die Messstrecke in beiden Richtungen mit voneinander weitgehend unabhängigen Radarsignalen zu überwachen.

Aus der US 2005/0221765 A1 ist ein drahtloses Kommunikationssystem auf Basis von Mikrowellentransceivern bekannt.

Die US 6 490 066 B1 kombiniert eine optische Kommunikation und eine Mikrowellenkommunikation durch einen Strahlteiler, welche den gemeinsamen Laser- und Mikrowellenstrahl aufteilt und separat auswertet.

Die GB 2 152 333 A offenbart einen Vollduplex-Mikrowellentransceiver.

In der EP 898 153 A1 wird ein Füllstandssensor offenbart, bei dem mehrere Mikrowellenempfänger in verschiedenen Höhen an einer Sonde vorgesehen sind.

Es ist daher Aufgabe der Erfindung, eine Mikrowellenschranke mit vereinfachtem Aufbau und verbessertem Messverhalten anzugeben.

Diese Aufgabe wird durch eine Mikrowellenschranke und ein Verfahren zur Erkennung eines Objekts in einem Mikrowellenpfad nach Anspruch 1 beziehungsweise 12 gelöst. Dabei geht die Erfindung von dem Grundgedanken aus, die beiden den Mikrowellenpfad aufspannenden Mikrowelleneinheiten nicht in Sender und Empfänger aufzuteilen, sondern beide Mikrowelleneinheiten untereinander gleichartig sowohl als Sender wie als Empfänger auszubilden. Dies ermöglicht auch eine bidirektionale Kommunikation zur Koordinierung, Überprüfung und zum Datenaustausch. Als Transceiver zum Senden und Empfangen wird dabei ein integrierter Baustein eingesetzt, insbesondere ein Digitalbaustein oder ein Mixed-Signal-Baustein, welcher nicht für eine Mikrowellenschranke entworfen und gefertigt ist, sondern für die drahtlose Kommunikation beispielsweise im Bereich RFID oder zur lokalen Vernetzung. Derartige Bausteine bieten eine Fülle von Funktionen, die zwar nicht für Mikrowellenschranken gedacht sind, sehr wohl aber vorteilhaft genutzt werden können.

Die Erfindung hat den Vorteil, dass überall gleichartige Mikrowelleneinheiten eingesetzt werden statt dedizierte Sender und Empfänger. Dadurch vereinfachen sich Herstellung, Handhabung und Lagerung. Die integrierten Hochfrequenz-Transceiver sind extrem kostengünstig und kommerziell erhältlich, ermöglichen so geringe Herstellkosten, kurze Entwicklungszyklen sowie ohne größere auf die Mikrowellenschranke bezogene Entwicklungsaktivität den automatischen Anschluss an die stetigen Verbesserungen in der drahtlosen Kommunikationstechnik. Wegen der extrem niedrigen Leistungsaufnahme der für tragbare Geräte optimierten Transceiver-Bausteine kommt die Mikrowellenschranke auch mit Anwendungen unter geringer Versorgung, etwa einen Zweidraht-HART-Anschluss, oder gegebenenfalls sogar mit einer Batterie aus.

Die Drahtloskommunikation ist überdies für den Einsatz unter Störeinflüssen und schwache Signale ausgelegt. Davon profitiert die Mikrowellenschranke in Form einer hohen Messempfindlichkeit für dünne Objekte, geringe durchlaufene Medienstrecken und kleine Dielektrizitätskonstanten der zu detektierenden Objekte. Die Anforderungen an Ausrichtung und Position der Mikrowelleneinheiten sind im Vergleich zu einer herkömmlichen Mikrowellenschranke erheblich geringer. Denn auch die Erkennung und dedizierte Zuordnung eines bestimmten Signals zählt zu den üblichen Aufgaben bei der Drahtloskommunikation, so dass der Baustein entsprechende Lösungen bereits mitbringt, das richtige Mikrowellensignal unter erschwerten Rahmenbedingungen zu finden und zuzuordnen. Gegenseitige Beeinflussungen von mehreren Mikrowellenschranken werden somit gleichsam automatisch berücksichtigt und ausgeschaltet. Schließlich kann über die bidirektionale Kommunikation entsprechender Veränderungen für eine erhöhte Stabilität gegenüber Driften einschließlich Temperaturschwankungen und alterungsbedingtem Leistungsabfall des Sendesignals gesorgt werden.

Die Hochfrequenz-Transceiver sind bevorzugt für das 2,4-GHz-ISM-Frequenzband (Industrial, Scientific and Medical Band) ausgelegt. Ein ISM-Frequenzband kann genehmigungsfrei genutzt werden, es sind also weltweit keine Restriktionen durch funktechnische Zulassung zu erwarten. Zugleich sollte ein Gerät, welches in einem ISM-Band betrieben wird, störungsresistent sein, weil jederzeit andere Sender in dem Band erwartet werden müssen. Mit dieser Problematik kann aber ein Baustein für drahtlose Kommunikation von sich aus umgehen.

Die Auswertungseinheit ist bevorzugt dafür ausgebildet, ein auf dem Mikrowellenpfad befindliches Objekt durch eine Intensitätsbewertung des Mikrowellensignals zu erkennen. Ein Objekt verändert abhängig von seinen Abmessungen in Richtung des Mikrowellenpfades und von seinen dielektrischen Eigenschaften die Dämpfung des Mikrowellensignals. Ein Baustein für drahtlose Kommunikation liefert diese Information als RSSI (Received Signal Strenght Indicator), aber auch aufbereitet in Form eines Gütefaktors für die Verbindungsqualität, etwa einem LQI (Link Quality Indikator). Hier werden also Auswertungen, die üblicherweise dazu dienen, die Qualität und Stabilität einer Kommunikationsverbindung zu bewerten, in einer neuen Funktion zum Rückschluss auf ein Objekt auf dem Mikrowellenpfad verwendet.

Die Auswertungseinheit ist bevorzugt für einen Einlernmodus ausgebildet, in dem Intensitätswerte für einen freien Mikrowellenpfad und/oder einen Mikrowellenpfad mit einem bekannten Objekt bestimmt und gespeichert werden. Damit stehen angepasste Referenzwerte zur Verfügung, um im Betrieb ein neues Objekt oder eine Veränderung in dem Mikrowellenpfad zu erkennen. Aus den eingelernten Intensitätswerten kann auch sofort eine Schaltschwelle bestimmt werden, wobei dann die Speicherung der Intensitätswerte in Form der Schaltschwellen erfolgt.

Die Auswertungseinheit ist bevorzugt für einen Testmodus ausgebildet, in dem keine Mikrowellen gesendet werden. Dazu wird bei deaktiviertem Sender der einen Mikrowelleneinheit geprüft, ob die gegenüberliegende Mikrowelleneinheit einen dementsprechend zu erwartenden Intensitätsabfall misst. Daran können Fehlfunktionen des Hochfrequenz-Transceivers oder von dessen zugeordneter Elektronik erkannt werden.

Der Baustein ist bevorzugt auf einer Elektronikkarte mit der Auswertungseinheit integriert. Dies ermöglicht einen besonders einfachen und kompakten Aufbau der Mikrowellenschranke. Zusätzliche Elektronik, beispielsweise ein I/O-Baustein zur Ansteuerung einer Schnittstelle, kann ebenfalls auf derselben Elektronikkarte untergebracht werden.

Die erste Antenne und/oder die zweite Antenne weisen bevorzugt eine ungerichtete Abstrahlung auf. Ungerichtet schließt hier auch eine verhältnismäßig breite Antennenkeule ein, die zwar beispielsweise zur Reichweitenerhöhung begrenzt ist und grob zu der gegenüberliegenden Mikrowelleneinheit ausrichtbar ist, diese jedoch deutlich überstrahlt. Eine ungerichtete Abstrahlung bedeutet demnach in diesem Zusammenhang nicht unbedingt eine omnidirektionale Abstrahlung, sondern dass die Antennenkeule auch nicht zugeordnete Mikrowelleneinheiten treffen kann.

In dem Baustein ist bevorzugt eine Koexistenzstrategie implementiert, mit der ein Mikrowellensignal und eine Mikrowelleneinheit einander eindeutig zugeordnet werden. Die bei der Drahtloskommunikation erforderliche eindeutige Geräteerkennung ist in entsprechenden Bausteinen ohnehin vorgesehen und wird hier ausgenutzt, um auch ohne Ausrichtung und Beschränkung der Antennenkeulen eine zugehörige Mikrowelleneinheit zu identifizieren. Um entsprechende Kommunikationskanäle zum gegenseitigen Ausweichen bereitzustellen, werden Eigenschaften des Mikrowellensignals variiert, beispielsweise durch Frequenzwechsel, codierende Modulation oder Frequenzspreizung (FHSS, Frequency Hopping Spread Spectrum, DSSS, Direct Sequence Spread Spectrum). Dadurch können viele Mikrowelleneinheiten parallel senden und wahlweise in Paaren oder sonstigen Gruppen zugeordnet werden. Die Parameter innerhalb der Koexistenzstrategie werden zur eindeutigen Identifikation einer Mikrowelleneinheit beispielsweise aus einer Serien- oder Gerätenummer abgeleitet.

Bevorzugt ist mindestens eine weitere Mikrowelleneinheit vorgesehen, die mit der ersten Mikrowelleneinheit und/oder der zweiten Mikrowelleneinheit mindestens einen weiteren Mikrowellenpfad zur Erkennung von Objekten in dem Mikrowellenpfad aufspannt. Solche Anordnungen mehrerer Mikrowelleneinheiten ist in zahllosen Konstellationen vorstellbar. Ermöglicht wird dies, weil die einzelnen Mikrowelleneinheiten sowohl senden als auch empfangen können und nicht nur auf ein Gegenüber ausgerichtet senden, sondern mit einer breiteren Antennenkeule Mikrowelleneinheiten in verschiedenen Positionen erreichen. Als ein Beispiel werden auf der einen Seite eines Überwachungsbereichs eine Mikrowelleneinheit und gegenüber mehrere Mikrowelleneinheiten zueinander beabstandet montiert. Damit ergibt sich eine Art Mikrowellengitter. Ein solches Gitter kann natürlich auch durch eine Vielzahl von Paaren von Mikrowelleneinheiten erzeugt werden. Ein solches klassisches Gitter erfordert aber gegenüber der Anzahl von zu überwachenden eine doppelte Anzahl Mikrowelleneinheiten, während in der soeben beschriebenen vorteilhaften Ausführungsform der Erfindung eine einzige zusätzliche Mikrowelleneinheit ausreicht.

Mindestens eine der Mikrowelleneinheiten weist bevorzugt eine Schnittstelle zur Übertragung von Daten aus der Mikrowellenschranke und/oder in die Mikrowellenschranke auf. Diese Schnittstelle wird beispielsweise über I/O-Link oder ein anderes Korhmunikationsprotokoll angesprochen. Besonders bevorzugt weist mindestens eine Mikrowelleneinheit keine eigene Schnittstelle auf, sondern tauscht Daten über den Mikrowellenpfad und die Schnittstelle einer anderen Mikrowelleneinheit aus. Hierbei wird der Mikrowellenpfad mit der bidirektionalen Verbindung zwischen den Mikrowelleneinheiten als Luftschnittstelle oder drahtlose I/O-Link-Brücke verwendet. Man braucht eine derart angebundene Mikrowelleneinheit dann nicht mehr mit einer drahtgebundenen Datenleitung anzuschließen. In der im vorigen Absatz beschriebenen Konstellation mit einer Mikrowelleneinheit auf der einen und mehreren Mikrowelleneinheiten auf der anderen Seite eines Überwachungsbereichs genügt es somit, eine einzige Mikrowelleneinheit drahtgebunden anzuschließen, um sämtliche Mikrowelleneinheiten ansprechen zu können.

In bevorzugter Weiterbildung weist ein Füllstandssensor oder Grenzstandswächter zur Bestimmung der Füllhöhe eines Mediums in einem Behälter mindestens eine erfindungsgemäße Mikrowellenschranke auf. Wie schon einleitend erwähnt, kann das zu erkennende Objekt auch ein Medium in einem Behälter sein, beispielsweise eine Flüssigkeit oder ein Schüttgut. Eine Mikrowellenschranke erkennt anhand ihrer Einbauhöhe, ob ein überwachter Grenzstand über- bzw. unterschritten wird. Durch Verfolgung der zeitlichen Historie der Grenzstandsübertritte, numerische statt Schwellwertauswertung der empfangenen Mikrowellenintensität und die gemeinsame Verarbeitung der Signale mehrerer Mikrowelleneinheiten in unterschiedlichen Einbauhöhen kann dabei in gewissen Grenzen auf einen Füllstand auch zwischen den diskreten Einbauhöhen der Mikrowelleneinheiten geschlossen werden.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Querschnittsansicht einer Mikrowellenschranke;
- Fig. 2: ein Blockdiagramm einer Mikrowelleneinheit der Mikrowellenschranke gemäß Figur 1;
- Fig. 3: eine Querschnittsdarstellung der Anbringung einer Mikrowellenschranke gemäß Figur 1 an einem Behälter zur Füllstands- oder Grenzstandsüberwachung; und
- Fig. 4: eine Querschnittsdarstellung der Anbringung einer anderen Ausführungsform einer Mikrowellenschranke mit zusätzlichen Mikrowelleneinheiten an einem Behälter zur Füllstands- oder Grenzstandsüberwachung.

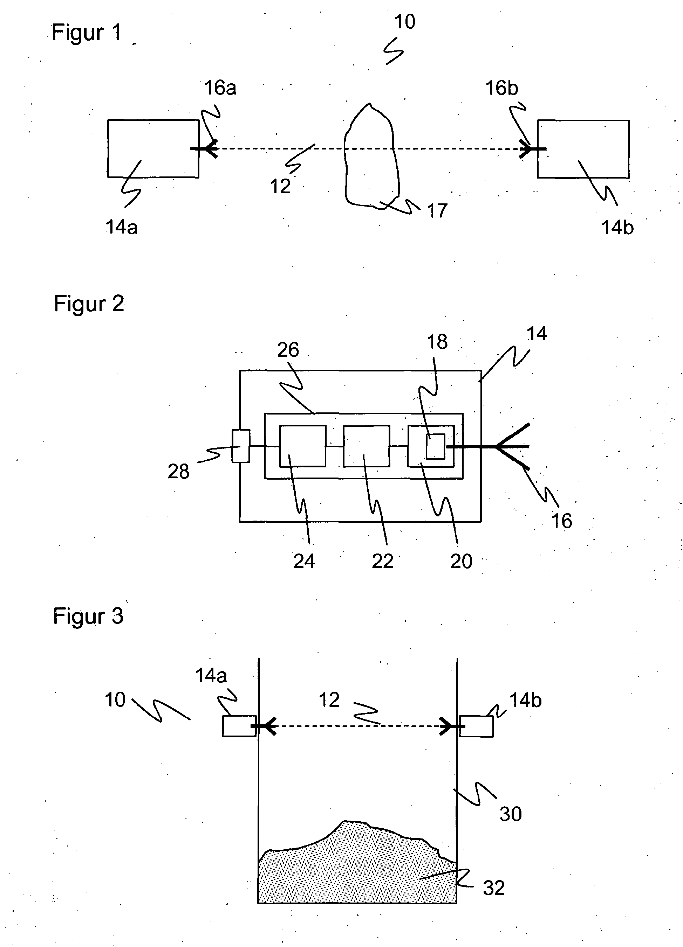

Figur 1 zeigt eine schematische Querschnittsansicht einer Mikrowellenschranke 10. Ein Mikrowellensignal wird auf einem Mikrowellenpfad 12 von einer ersten Mikrowelleneinheit 14a mit einer Antenne 16a abgestrahlt und von einer zweiten Mikrowelleneinheit 14b mit einer zweiten Antenne 16b empfangen oder umgekehrt. Durchdringt das Mikrowellensignal auf dem Mikrowellenpfad 12 ein Objekt 17, so wird es in Abhängigkeit von der Breite des Objekts 17 und dessen dielektrischen Eigenschaften gedämpft. Daran kann erkannt werden, ob der Mikrowellenpfad 12 frei ist oder ob sich dort ein Objekt 17 befindet.

Figur 2 zeigt eine Mikrowelleneinheit 14 in einem Blockdiagramm. Dabei sind beide Mikrowelleneinheiten 14a-b baugleich, so dass die Figur 2 wahlweise als Darstellung der ersten Mikrowelleneinheit 14a oder der zweiten Mikrowelleneinheit 14b aufgefasst werden kann. Ein integrierter Hochfrequenz-Transceiver 18 ist an die Antenne 16 angeschlossen, um ein Mikrowellensignal abzustrahlen oder zu empfangen. Der Hochfrequenz-Transceiver 18 ist Teil eines digitalen Bausteins 20 beziehungsweise eines Mixed-Signal-Bausteins zur drahtlosen bidirektionalen Kommunikation, beispielsweise ein kommerziell aus dem Bereich Wireless/Handheld erhältlicher Low-Cost-Baustein.

Der digitale Baustein 20 wird gemeinsam mit einer Auswertungs- und Steuereinheit 22 sowie einem I/O-Baustein 24 auf einer Elektronikkarte 26 integriert. Über den I/O-Baustein 24 kann eine Schnittstelle 28 mittels I/O-Link oder einer beliebigen anderen Verbindung angesprochen werden, um die Mikrowelleneinheit 14 zu parametrieren oder Daten auszugeben. Alternativ erfolgt die Parametrierung und/oder Datenausgabe über Bedienelemente und ein Display.

Die Mikrowellenschranke 10 kann allgemein für die Anwesenheitserkennung von Objekten 17 eingesetzt werden. In einer bevorzugten Ausführungsform wird die Mikrowellenschranke 10 zur Füllstands- oder Grenzstandsüberwachung verwendet, wie dies in Figur 3 in einer Querschnittsdarstellung eines Behälters 30 mit einem darin befindlichen Medium 32, beispielsweise einer Flüssigkeit oder wie gezeigt einem Schüttgut, und an der Behälterwand montierter Mikrowellenschranke 10 illustriert ist. Im Folgenden werden einzelne Merkmale der Mikrowellenschranke 10 sowie deren Messverfahren an diesem Beispiel der Grenzstandsüberwachung beschrieben, die sich aber zumeist auf eine allgemeine Anwesenheitserkennung übertragen lassen, wenn man die Einflüsse von Objekt 17 und Medium 32 auf das Mikrowellensignal einander entsprechen lässt.

Für eine Grenzstandsmessung erzeugt der Hochfrequenz-Transceiver 18 einer Mikrowelleneinheit 14a-b ein Mikrowellensignal, das in der gegenüberliegenden Mikrowelleneinheit 14b-a empfangen wird. Um einen geringen Energieverbrauch zu begünstigen und dennoch eine hohe Reichweite zu erzielen, sollte die Frequenz möglichst niedrig gewählt werden. Dafür kann vorteilhaft das ISM-Band bei 2,4 GHz genutzt werden, für das vielfältige integrierte Lösungen entwickelt wurden, so dass geeignete digitale Bausteine 20 zur Verfügung stehen.

Die mit 2,4 GHz im Vergleich mit herkömmlichen Systemen niedrige Funkfrequenz bedarf an sich größerer Antennen. Auf den ersten Blick ergeben sich damit Nachteile beim Antennendesign, die aber durch die hier vorgeschlagene Signalverarbeitung und geringere Anforderungen an die Antennencharakteristik ausgeglichen werden. Die Antennen 16a-b sind nicht darauf optimiert, die Sende- und Empfangscharakteristik möglichst schmal und eng zu gestalten, sondern es wird durchaus eine breitere Abstrahlkeule zugelassen. Damit wird die Installation erleichtert, da die Mikrowelleneinheiten 14a-b zueinander nicht mehr wie dem Stand der Technik entsprechend präzise ausgerichtet sein müssen.

Die Auswertungseinheit 22 erzeugt ein Schaltsignal, das durch Medium 32 in dem Mikrowellenpfad 12 ausgelöst wird. Mit dem Schaltsignal gibt die Mikrowellenschranke die Information aus, ob der überwachte Grenzstand erreicht ist oder nicht. Dazu wird eine Signaldämpfung ausgewertet, deren Grundlage eine von dem digitalen Baustein bereitgestellte Qualitätskennzahl bildet. Denkbare Maße sind das sogenannte RSSI (Received Signal Strength Indicator) oder der LQI (Link Quality Indicator) gemäß dem IE-EE 802.15.4. Vorzugsweise wird also die Intensität nicht direkt bewertet, sondern eine in dem digitalen Baustein 20 ohnehin bereitgestellte Vorverarbeitung zu einer einfach vergleichbaren Qualitätskennzahl ausgenutzt. Aus dieser Information über die Eigenschaften des Kommunikationskanals zwischen den Mikrowelleneinheiten 14a-b kann dann das Schaltsignal abgeleitet werden.

In einer vorteilhaften Weiterbildung der Erfindung wird nicht nur ein Schaltsignal, sondern ein kontinuierliches Messsignal für einen Füllstand in einem Bereich des Behälters 30 abgeleitet, in dem sich das Mikrowellensignal ausbreitet. Hierbei spielt also nicht nur der direkte Mikrowellenpfad 12 eine Rolle, sondern es wirken sich auch Mehrwegeausbreitungen aus, die für die kontinuierliche Füllstandsmessung dieses Anwendungsfalls sogar hilfreich sein können. Eine sich stetig verändernde Dämpfung des Mikrowellensignals durch stetige Änderung des Füllstands tritt beispielsweise bei Schüttgütern als Medium 32 auf, die beim Aufschütten einen kegelförmigen Berg bilden.

Ein großer Vorteil beim Einsatz eines digitalen Bausteins 20 liegt darin, dass für die drahtlose Kommunikation bereits Lösungen für Koexistenzstrategien integriert sind, beispielsweise Frequency-Hopping-Spread-Spectrum (FHSS), Pulsfolgencodierungen oder Direct-Sequence-Spread-Spectrum (DSSS), etwa um darauf aufbauend CSMA/CA als Layer-2-Protkoll des ISO/OSI-Modells zu realisieren. Somit kann das Protokoll, das der digitale Baustein 20 für Kommunikationsverbindungen anbietet, genutzt werden, um eine eindeutige Zuordnung zwischen Mikrowelleneinheiten 14a-b vorzunehmen. Dadurch können sehr viele Mikrowellenschranken 10 beziehungsweise Mikrowelleneinheiten 14a-b parallel betrieben werden, ohne sich gegenseitig bei ihrer Messaufgabe zu beeinflussen.

Die Parametrierung der Schaltschwellen erfolgt durch Vorgabe einer Dämpfung. Dazu wird beispielsweise die Qualitätskennzahl der Mikrowellenverbindung zwischen den Mikrowelleneinheiten ohne Medium 32 in dem Behälter 30 beziehungsweise mit ausreichendem Abstand des Mediums 32 zu dem Mikrowellenpfad 12 bestimmt. Davon ausgehend wird aus der gewünschten Empfindlichkeit des Systems die Schaltschwelle abgeleitet, wobei es eine physikalisch bedingte reziproke Abhängigkeit zwischen der Empfindlichkeit und der erforderlichen Messzeit gibt.

Die beiden Mikrowelleneinheiten 14a-b sind zueinander zumindest insoweit in identischer Hardware aufgebaut, dass sie beide Rollen als Sender und Empfänger ausfüllen. Damit stehen Schaltinformationen den Schnittstellen 28 beider Mikrowelleneinheiten 14a-b an. Da die Mikrowelleneinheiten 14a-b über die Mikrowellenverbindung miteinander kommunizieren können, ist es ausreichend, wenn nur eine Mikrowelleneinheit 14a-b eine Schnittstelle 28 aufweist. Parametrierungen wie Messdaten, also beispielsweise die Empfindlichkeit, die Schwellen, Ansprechverzögerung oder Schaltzustände können über diese Luftschnittstelle zwischen den Mikrowelleneinheiten 14a-b ausgetauscht werden. Prinzipiell kann die Mikrowellenschranke 10 auch als Kommunikationsverbindung für beliebige andere Daten genutzt werden. Sind beispielsweise die Mikrowelleneinheiten 14a-b mittels I/O-Link oder einem anderen Protokoll in ein übergeordnetes System eingebunden, so kann die Mikrowellenverbindung als I/O-Link-Brücke beziehungsweise Brücke nach dem anderen Protokoll zwischen Komponenten dieses übergeordneten Systems genutzt werden.

Um mit der Mikrowellenschranke 10 und einer dafür geeigneten Steuerung ein Sicherheitssystem zu realisieren, kann ein zusätzlicher, nicht dargestellter Schalteingang beispielsweise nach IEC61131 vorgesehen sein, über den die Sendefunktion der jeweiligen Mikrowelleneinheit 14a-b deaktivierbar ist. Damit wird ein Systemtest zum Sicherstellen der fehlerfreien Funktionsfähigkeit ermöglicht. Die vorübergehende Deaktivierung zu Testzwecken sollte unabhängig von der normalen Informationsverarbeitung bleiben, etwa durch eine unabhängige Hardwareschaltung, welche das Hochfrequenzsignal unterbricht oder kurzschließt. Da dann die Kommunikationsverbindung abbricht, wird bei sonst freiem Ausbreitungsweg die übergeordnete Steuerung eine Änderung des Schaltsignals feststellen und kann so das System überprüfen.

Um Objekte 17 an mehreren Positionen zu erfassen beziehungsweise mehrere Grenzstände eines Mediums 32 zu überwachen, können mehrere Mikrowellenschranken 10 parallel zueinander angeordnet werden. Wie oben mehrfach diskutiert, sorgen dann Koexistenzstrategien des digitalen Bausteins 10 dafür, dass dabei die Zuordnung der verschiedenen Mikrowelleneinheiten 14 erhalten bleibt.

Es gibt zu einer parallelen Mehrfachanordnung von Mikrowellenschranken 10 aber auch eine Alternative mit geringerem apparativem Aufwand. Denn anders als bei der strikt paarweisen Zuordnung von Sender und Empfänger nach dem Stand der Technik können Mikrowelleneinheiten 14 wegen ihrer bidirektionalen Sende- und Empfangsfunktion auch mehrere Mikrowellenpfade aufspannen.

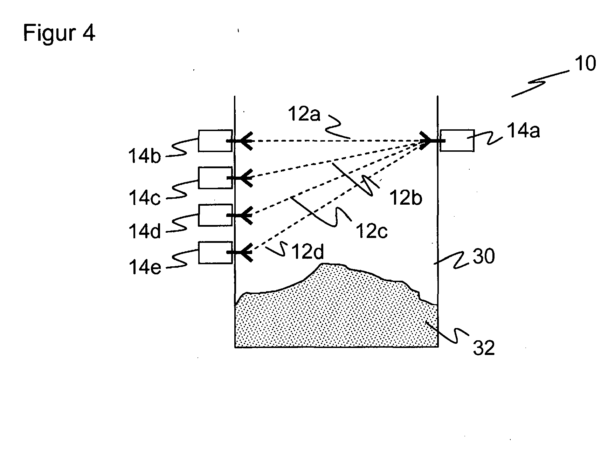

Figur 4 zeigt ein Beispiel für eine Mikrowellenschranke 10 mit mehreren Mikrowelleneinheiten 14a-e als Grenzstandswächter für mehrere Grenzstände eines Mediums 32. Dabei sind auf einer Seite des Behälters 32 nur eine einzelne Mikrowelleneinheit 14a vorzugsweise bei dem höchsten zu überwachenden Füllstand und auf der anderen Seite mehrere, in diesem Beispiel vier Mikrowelleneinheiten 14b-e montiert. Die Einbauhöhe der mehreren Mikrowelleneinheiten 14b-e entspricht den zu überwachenden Füllständen, wobei sich wegen der schrägen direkten Mikrowellenpfade 12a-d eine Abweichung zwischen Einbauhöhe und zu überwachendem Füllstand ergeben kann, die dann für die tatsächliche Einbauhöhe berücksichtigt wird. Wegen der breiten, im Extremfall fast omnidirektionalen Abstrahlung wird das Mikrowellensignal der einzelnen Mikrowelleneinheit 14a auf der einen Seite von allen Mikrowelleneinheiten 14b-e auf der anderen Seite empfangen und umgekehrt. Dabei sind die mehreren Mikrowelleneinheiten 14b-e so parametriert, dass sie der einzelnen Mikrowelleneinheit 14a zugeordnet sind. Im Vergleich zu mehreren parallel montierten Mikrowellenschranken wird so die Anzahl der Mikrowelleneinheiten 14 erheblich reduziert, und es entfallen damit nicht nur Mikrowelleneinheiten 14, sondern auch Montagekosten, Flansche und dergleichen.

In dieser Ausführungsform ist besonders nützlich, wenn nur die einzelne Mikrowelleneinheit 14a eine Schnittstelle 28 aufweist und die mehreren Mikrowelleneinheiten 14b-e über die Mikrowellenpfade 12a-b und die einzelne Mikrowelleneinheit 14a kommunizieren. Sämtliche Informationen laufen somit in der einzelnen Mikrowelleneinheit 14a zusammen und können dort eingegeben und abgegriffen werden. Der Verdrahtungsaufwand zur Einbindung der Mikrowelleneinheiten 14b-e in ein Kommunikationssystem entfällt somit.

## Patentansprüche

1. Mikrowellenschranke (10), die eine erste Mikrowelleneinheit (14a) mit einem Mikrowellensender und einer ersten Antenne (16a) zum Abstrahlen eines Mikrowellensignals und eine zweite Mikrowelleneinheit (14b) mit einem Mikrowellenempfänger und einer zweiten Antenne (16b) zum Empfangen des Mikrowellensignals sowie eine Auswertungseinheit (22) aufweist, die dafür ausgebildet ist, aus dem empfangenen Mikrowellensignal durch eine Intensitätsbewertung zu erkennen, ob sich auf dem Mikrowellenpfad (12) zwischen der ersten Mikrowelleneinheit (14a) und der zweiten Mikrowelleneinheit (14b) ein Objekt (17, 32) befindet, wobei die erste Mikrowelleneinheit (14a) und die zweite Mikrowelleneinheit (14b) jeweils einen Hochfrequenz-Transceiver (18) aufweisen, um Mikrowellensignale abzustrahlen und zu empfangen,
**dadurch gekennzeichnet,**
**dass** der Hochfrequenz-Transceiver (18) Teil mindestens eines für die drahtlose Kommunikation entwickelten integrierten Bausteins (20) ist, dass in dem Baustein eine Auswertung vorgesehen ist, welche die Qualität und Stabilität einer Kommunikationsverbindung bewertet und die von der Auswertungseinheit (22) als Information über die Intensität zum Rückschluss auf ein Objekt auf dem Mikrowellenpfad (12) verwendet wird, und dass in dem Baustein eine Koexistenzstrategie implementiert ist, mit der ein Mikrowellensignal und eine Mikrowelleneinheit einander eindeutig zugeordnet werden.

2. Mikrowellenschranke (10) nach Anspruch 1,
wobei die Hochfrequenz-Transceiver (18) für das 2,4-GHz-ISM-Frequenzband ausgelegt sind.

3. Mikrowellenschranke (10) nach Anspruch 1 oder 2,
wobei die Auswertungseinheit (22) dafür ausgebildet ist, ein auf dem Mikrowellenpfad (12) befindliches Objekt (17, 32) durch Auswertung des RSSI oder eines Gütefaktors für die Verbindungsqualität zu erkennen.

4. Mikrowellenschranke (10) nach einem der vorhergehenden Ansprüche,
wobei die Auswertungseinheit (22) für einen Einlernmodus ausgebildet ist, in dem Intensitätswerte für einen freien Mikrowellenpfad (12) und/oder einen Mikrowellenpfad (12) mit einem bekannten Objekt (17, 32) bestimmt und gespeichert werden und daraus insbesondere mindestens eine Schaltschwelle abgeleitet wird.

5. Mikrowellenschranke (10) nach einem der vorhergehenden Ansprüche,
wobei die Auswertungseinheit (22) für einen Testmodus ausgebildet ist, in dem keine Mikrowellen gesendet werden.

6. Mikrowellenschranke (10) nach einem der vorhergehenden Ansprüche,
wobei der Baustein (20) auf einer Elektronikkarte (26) mit der Auswertungseinheit (22) integriert ist.

7. Mikrowellenschranke (10) nach einem der vorhergehenden Ansprüche,
wobei die erste Antenne (16a) und/oder die zweite Antenne (16b) eine ungerichtete Abstrahlung aufweisen.

8. Mikrowellenschranke (10) nach einem der vorhergehenden Ansprüche,
wobei in dem Baustein (20) als Koexistenzstrategie Frequenzwechsel oder Frequenzspreizung implementiert ist.

9. Mikrowellenschranke (10) nach einem der vorhergehenden Ansprüche,
wobei mindestens eine weitere Mikrowelleneinheit (14c-e) vorgesehen ist, die mit der ersten Mikrowelleneinheit (14a) und/oder der zweiten Mikrowelleneinheit (14b) mindestens einen weiteren Mikrowellenpfad (12b-d) zur Erkennung von Objekten (17, 32) in dem Mikrowellenpfad (12b-d) aufspannt.

10. Mikrowellenschranke (10) nach einem der vorhergehenden Ansprüche,
wobei mindestens eine der Mikrowelleneinheiten (14a-e) eine Schnittstelle (28) zur Übertragung von Daten aus der Mikrowellenschranke (10) und/oder in die Mikrowellenschranke (10) aufweist, wobei insbesondere mindestens eine Mikrowelleneinheit (14a-e) keine eigene Schnittstelle (28) aufweist, sondern Daten über den Mikrowellenpfad (12a-d) und die Schnittstelle (28) einer anderen Mikrowelleneinheit (14a-e) austauscht.

11. Füllstandssensor oder Grenzstandswächter zur Bestimmung der Füllhöhe eines Mediums (32) in einem Behälter (30) mit mindestens einer Mikrowellenschranke (10) nach einem der vorhergehenden Ansprüche.

12. Verfahren zur Erkennung eines Objekts in einem Mikrowellenpfad (12) durch Übertragen eines Mikrowellensignals zwischen einer ersten Mikrowelleneinheit (14a) und einer zweiten Mikrowelleneinheit (14b), wobei das Mikrowellensignal mittels eines Hochfrequenz-Transceivers (18) bidirektional von der ersten Mikrowelleneinheit (14a) zu der zweiten Mikrowelleneinheit (14a) und umgekehrt abgestrahlt und empfangen wird und wobei durch eine Intensitätsbewertung des Mikrowellensignals erkannt wird, ob sich auf dem Mikrowellenpfad (12) zwischen der ersten Mikrowelleneinheit (14a) und der zweiten Mikrowelleneinheit (14b) ein Objekt (17, 32) befindet,
**dadurch gekennzeichnet,**
**dass** die Hochfrequenzverarbeitung des Hochfrequenz-Transceivers (18) in einem integrierten Baustein (20) für die drahtlose Kommunikation und auf Basis von Verfahren erfolgt, die in dem Baustein (20) implementiert sind, wobei in einem solchen Verfahren die Qualität und Stabilität einer Kommunikationsverbindung bewertet und dies als Information über die Intensität zum Rückschluss auf ein Objekt auf dem Mikrowellenpfad verwendet wird und in einem weiteren solchen Verfahren eine Koexistenzstrategie genutzt wird, um ein Mikrowellensignal und eine Mikrowelleneinheit einander eindeutig zuzuordnen.

## Claims

1. A microwave barrier (10) comprising a first microwave unit (14a) having a microwave transmitter and a first antenna (16a) for transmitting a microwave signal and a second microwave unit (14b) having a microwave receiver and a second antenna (16b) for receiving the microwave signal as well as an evaluation unit (22) configured to recognize from the received microwave signal whether an object (17, 32) is located on the microwave path (12) between the first microwave unit and the second microwave unit, wherein the first microwave unit (14a) and the second microwave unit (14b) each have a high frequency transceiver (18) to transmit and receive microwave signals
**characterized in that** the high frequency transceiver (18) is part of at least one integrated module (20) developed for wireless communication, **in that** an evaluation is provided in the module (20) which assesses quality and stability of a communication connection which is used by the evaluation unit (22) as an information about the intensity for drawing a conclusion about an object on the microwave path (12), and **in that** a coexistence strategy is implemented on the module by means of which a microwave signal and a microwave unit can unambiguously be assigned with one another.

2. The microwave barrier (10) in accordance with claim 1,
wherein the high frequency transceivers (18) are configured for the 2.4 GHz ISM frequency band.

3. The microwave barrier (10) in accordance with claim 1 or 2,
wherein the evaluation unit (22) is configured to recognize an object (17, 32) located on the microwave path (12) by an evaluation of the RSSI or a quality factor for the connection quality.

4. The microwave barrier (10) in accordance with any of the preceding claims,
wherein the evaluation unit (22) is configured for a teaching mode in which intensity values for a free microwave path (12) and/or for a microwave path (12) having a known object (17, 13) are determined and stored and in particular at least one switching threshold is derived therefrom.

5. The microwave barrier (10) in accordance with any of the preceding claims,
wherein the evaluation unit (22) is configured for a test mode in which no microwaves are transmitted.

6. The microwave barrier (10) in accordance with any of the preceding claims,
wherein the module (20) is integrated on an electronic card (26) with the evaluation unit (22).

7. The microwave barrier (10) in accordance with claim any of the preceding claims,
wherein the first antenna (16a) and/or the second antenna (16b) has a non-directional transmission.

8. The microwave barrier (10) in accordance with any of the preceding claims,
wherein frequency hopping or frequency spread are implemented on the module (20) as a coexistence strategy.

9. The microwave barrier (10) in accordance with any of the preceding claims,
wherein at least one further microwave unit (14c-e) is provided which spans at least one further microwave path (12b-d) with the first microwave unit (14a) and/or the second microwave unit (14b) for the recognition of objects (17, 32) in the microwave path (12b-d).

10. The microwave barrier (10) in accordance with any of the preceding claims,
wherein at least one of the microwave units (14a-e) has an interface (28) for transmitting data from the microwave barrier (10) and/or into the microwave barrier (10), wherein in particular at least one microwave unit (14a-e) does not have its own interface (28), but rather exchanges data via the microwave path (12a-d) and the interface (28) of another microwave unit (14a-e).

11. A fill level sensor or point level monitor for determining the fill level of a medium (32) in a container (30) with at least one microwave barrier (10) according to any of the preceding claims.

12. A method of recognizing an object in a microwave path (12) by transmitting a microwave signal between a first microwave unit (14a) and a second microwave unit (14b), wherein the microwave signal is bidirectionally transmitted and received from the first microwave unit (14a) to the second microwave unit (14a) and vice versa by means of a high frequency transceiver (18) and wherein it is detected by an intensity evaluation of the microwave signal whether an object is located on the microwave path between the first microwave unit (14a) and the second microwave unit (14b), **characterized in that** the high frequency processing of the high frequency transceiver (18) takes place in an integrated module (20) for wireless communication and on the basis of processes which are implemented in the module (20), wherein in one such process the quality and stability of a communication connection is assessed and this is used as an information about the intensity for drawing a conclusion about an object on the microwave path (12) and in a further such process a coexistence strategy is used to unambiguously assign a microwave signal and a microwave unit with one another.

## Revendications

1. Barrière à micro-ondes (10), qui comprend une première unité à micro-ondes (14a) avec un émetteur de micro-ondes et une première antenne (16a) pour envoyer un signal à micro-ondes, et une seconde unité à micro-ondes (14b) avec un récepteur de micro-ondes et une seconde antenne (16b) pour recevoir le signal à micro-ondes, ainsi qu'une unité d'évaluation (22), laquelle est réalisée pour reconnaître par une analyse d'intensité à partir du signal à micro-ondes reçu si un objet (17, 32) se trouve sur le trajet des micro-ondes (12) entre la première unité à micro-ondes (14a) et la seconde unité à micro-ondes (14b), dans laquelle la première unité à micro-ondes (14a) et la seconde unité à micro-ondes (14b) comprennent chacune un émetteur-récepteur à haute fréquence (18) afin d'envoyer et de recevoir des signaux à micro-ondes, **caractérisée en ce que**
l'émetteur-récepteur à haute fréquence (18) fait partie d'au moins un composant intégré (20) développé pour la communication sans fil, **en ce qu'**il est prévu dans le composant une évaluation qui analyse la qualité et la stabilité d'une liaison de communication et qui est utilisé par l'unité d'évaluation (22) à titre d'information sur l'intensité pour conclure à la présence d'un objet sur le trajet des micro-ondes (12), et **en ce qu'**une stratégie de coexistence est mise en oeuvre dans le composant, avec laquelle un signal à micro-ondes et une unité à micro-ondes sont associés l'un à l'autre de façon univoque.

2. Barrière à micro-ondes (10) selon la revendication 1,
dans laquelle l'émetteur-récepteur à haute fréquence (18) est conçu pour la gamme de fréquence à 2,4 GHz-ISM.

3. Barrière à micro-ondes (10) selon la revendication 1 ou 2,
dans laquelle l'unité d'évaluation (22) est réalisée pour reconnaître un objet (17, 32) qui se trouve sur le trajet des micro-ondes (12) par évaluation du RSSI ou d'un facteur de qualité pour la qualité de la liaison.

4. Barrière à micro-ondes (10) selon l'une des revendications précédentes,
dans laquelle l'unité d'évaluation (22) est réalisée pour un mode d'apprentissage dans lequel des valeurs d'intensité pour un trajet libre pour les micro-ondes (12) et/ou pour un trajet à micro-ondes (12) occupé avec un objet connu (17, 32) sont déterminées et mémorisées, et en particulier au moins un seuil de commutation est dérivé de ces valeurs.

5. Barrière à micro-ondes (10) selon l'une des revendications précédentes,
dans laquelle l'unité d'évaluation (22) est réalisée pour un mode de test dans lequel aucunes micro-ondes ne sont émises.

6. Barrière à micro-ondes (10) selon l'une des revendications précédentes,
dans laquelle le composant (20) est intégré sur une carte électronique (26) avec l'unité d'évaluation (22).

7. Barrière à micro-ondes (10) selon l'une des revendications précédentes,
dans laquelle la première antenne (16a) et/ou la seconde antenne (16b) présente un rayonnement sans orientation.

8. Barrière à micro-ondes (10) selon l'une des revendications précédentes,
dans laquelle un changement de fréquence ou un étalement de fréquence est mis en oeuvre à titre de stratégie de coexistence dans le composant (20).

9. Barrière à micro-ondes (10) selon l'une des revendications précédentes,
dans laquelle il est prévu au moins une autre unité à micro-ondes (14c-e), qui couvre, avec la première unité à micro-ondes (14a) et/ou avec la seconde unité à micro-ondes (14b), au moins un autre trajet de micro-ondes (12b-d) pour reconnaître des objets (17, 32) dans le trajet des micro-ondes (12b-d).

10. Barrière à micro-ondes (10) selon l'une des revendications précédentes,
dans laquelle l'une au moins des unités à micro-ondes (14a-e) comprend une interface (28) pour la transmission de données depuis la barrière à micro-ondes (10) et/ou vers la barrière à micro-ondes (10), et en particulier au moins une unité à micro-ondes (14a-e) ne comprend pas d'interface propre (28), mais échange des données via le trajet de micro-ondes (12a-d) et l'interface (28) d'une autre unité à micro-ondes (14a-e).

11. Capteur de niveau de remplissage ou dispositif de surveillance de frontière pour déterminer la hauteur de remplissage d'un milieu (32) dans un réservoir (30), comprenant au moins une barrière à micro-ondes (10) selon l'une des revendications précédentes.

12. Procédé pour reconnaître un objet dans un trajet de micro-ondes (12) par transmission d'un signal à micro-ondes entre une première unité à micro-ondes (14a) et une seconde unité à micro-ondes (14b), dans lequel le signal à micro-ondes est émis et reçu au moyen d'un émetteur-récepteur (18) à haute fréquence de manière bidirectionnelle depuis la première unité à micro-ondes (14a) vers la seconde unité à micro-ondes (14a) et inversement, et dans lequel on reconnaît, par analyse d'intensité du signal à micro-ondes, si un objet (17, 32) se trouve sur le trajet des micro-ondes (12) entre la première unité à micro-ondes (14a) et la seconde unité à micro-ondes (14b),
**caractérisé en ce que**
le traitement à haute fréquence de l'émetteur-récepteur à haute fréquence (18) a lieu dans un composant intégré (20) pour la communication sans fil et sur la base de procédures qui sont mises en oeuvre dans le composant (20), dans lequel on analyse dans une telle procédure la qualité la stabilité d'une liaison de communication et on l'utilise à titre d'information sur l'intensité pour conclure quant à la présence d'un objet sur le trajet des micro-ondes et, dans une autre procédure on utilise une stratégie de coexistence afin d'associer un signal à micro-ondes et une unité à micro-ondes l'un à l'autre de façon univoque.
